Europäisches Patentamt

European Patent Office

Office européen des brevets

(11) Publication number: **0 263 549**
**A1**

## (12) EUROPEAN PATENT APPLICATION

(21) Application number: 87201760.3

(22) Date of filing: 15.09.87

(51) Int. Cl.⁴ **B62D 49/02** , B62D 21/18

(30) Priority: 10.10.86 GB 8624328

(43) Date of publication of application:
**13.04.88 Bulletin 88/15**

(84) Designated Contracting States:
FR NL SE

(71) Applicant: **Massey-Ferguson Manufacturing Limited**
**33/35 Davies Street**
**London W1Y 2EA(GB)**

(72) Inventor: **Page, Ronald Cecil**
**255, Station Rd., Balsall Common**
**Coventry, Warwickshire(GB)**

(74) Representative: **Hogg, Jeffery Keith**
**Massey-Ferguson-Perkins Limited**
**Stareton, Nr Kenilworth Warwickshire CV8 2LJ(GB)**

(54) **Agricultural or industrial tractor.**

(57) One or more longitudinally extending beam members (12) are connected to a tractor chassis and are pre-loaded in bending so as to apply a corresponding bending reaction to the chassis that acts in the opposite sense to the bending load produced by lifted loads at the front or rear of the tractor. In a conventional tractor chassis, each beam member (12) preferably extends substantially the full length of the chassis and its ends co-operate with the front axle support (2) and rear axle housing (4), respectively, and an intermediate portion of the beam member is bolted to an intermediate major chassis component such as the transmission housing (3). The connection to the chassis may be made via a front loader attachment frame (6).

FIG.1

EP 0 263 549 A1

## AGRICULTURAL OR INDUSTRIAL TRACTOR

Technical Field

This invention relates to agricultural or industrial tractors, especially tractors that are adapted to lift loads at the front or rear.

A conventional tractor comprises an assembly of major components including the front axle support, the engine, the clutch housing, the transmission housing and the rear axle housing, that are bolted together to form an integral chassis. The strength of the chassis is therefore dependent on the strength of these individual components and the bolted connections between them. At its operational imits when lifting a heavy load at the front or rear, the load is transferred to the chassis as a bending load and there is a risk that one or more of these components or a connection between them will fail and the tractor collapse.

Tractors are also commonly known having a chassis comprising a number of the major components such as the transmission housing and rear axle housing bolted togehter, and a subframe adapted to support other major components such as the engine so that these other components do not form part of the chassis and can be readily removed for repair of service. However, without extending the use of the subframe to form the complete chassis, there are still some major components subject to bending loads and, therefore, a risk of failure when lifting heavy loads.

Disclosure of the Invention

An object of the present invention is to strengthen the chassis of a tractor so as to protect the major components of the chassis against the adverse effects of bending loads applied when lifting heavy loads at the front or rear of the tractor.

This object is achieved according to the invention by providing one or more longitudinally extending beam members that are connected to the chassis and are pre-loaded in bending so as to apply a corresponding bending reaction to the chassis that acts in the opposite sense to the bending load produced by loads lifted at the front or rear of the tractor. In particular, the bending pre-load serves to compress the upper parts of the connections between the major components of the chassis and counteracts the separating forces produced by lifted loads that tend to arch the chassis.

Preferably, opposite ends of each beam member co-operate with the chassis, and an intermediate portion of the beam member is connected to the chassis so as to load the beam member in bending whilst its ends are held by engagement with the chassis. In a conventional tractor chassis, each beam member preferably extends substantially the full length of the chassis and its ends co-operate with the front axle support and rear axle housing, respectively, and an intermediate portion of the beam member is bolted to an intermediate major chassis component such as the transmission housing. For example, the front end of each beam member may be connected to the front axle support, the rear end of each beam member may abut the underside of the rear axle housing, and an intermediate portion of the beam member may be connected to the transmission through bolts that pull said intermediate portion upwards so as to load the beam member in bending.

In the particular application of the invention to a tractor fitted with a detachable front-mounted loader, the beam members may be provided, one each side of the tractor and each may be connected to the tractor chassis via a loader attachment frame. For example, the attachment frame may comprise longitudinal side members connected to the front axle support and a transverse underbeam between the side members that is connected to the transmission housing. The front ends of the beam members may each be connected to a respective side member, and the intermediate portion of the beam members may each be connected to the respective end of the underbeam. The rear ends of the beam members may each abut the underside of the front axle housing.

Description of the Drawings

The invention will now be described by way of example with reference to the accompanying drawings in which:-

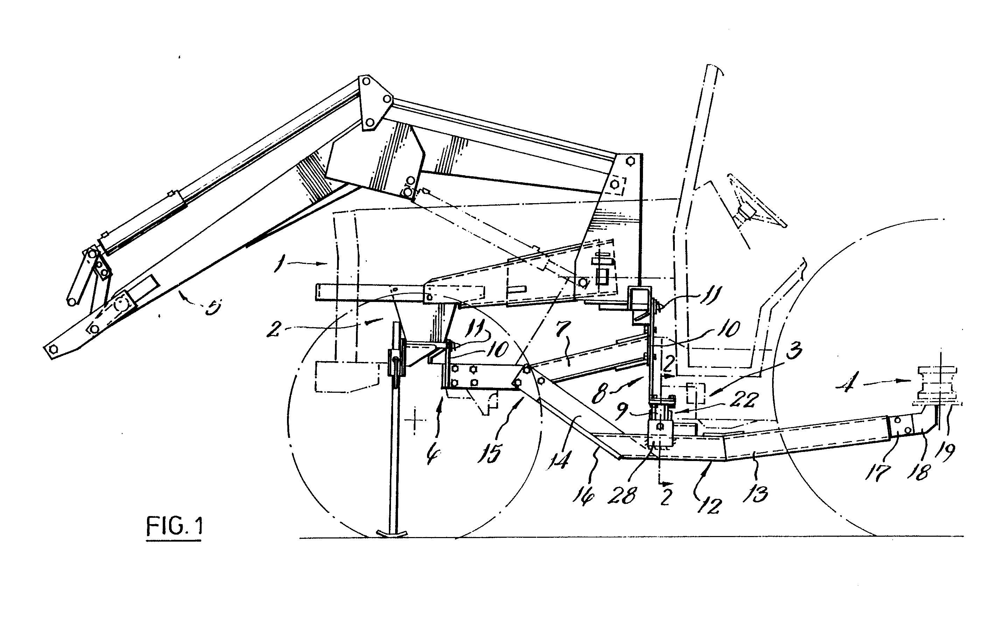

Figure 1 is a side elevatioon of a tractor fitted with a detachable front-mounted loader and incorporating a beam member according to the invention;

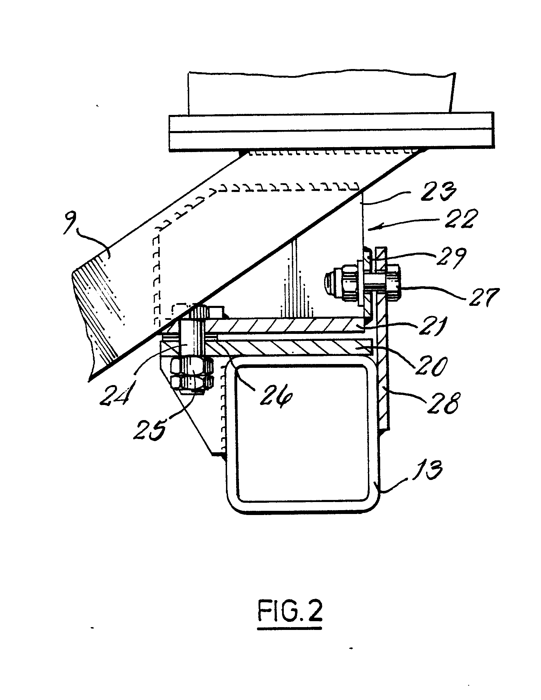

Figure 2 is a section on the line 2-2 in Figure 1 showing the attachment of an intermediate portion of a beam member to the underbeam of the loader.

## Best Mode of carrying out the Invention

The illustrated tractor has a conventional chassis comprising an engine 1, a front axle support 2 bolted to the engine, a transmission housing 3 bolted to the rear of the engine, and a rear axle housing 4 bolted to the rear of the transmission housing. A loader 5 is mounted on the front of the tractor and is detachably supported on an attachment frame 6 comprising a longitudinal side member 7 and upright support post 8 each side of the chassis and a transverse underbeam 9 that is connected between the two posts 8. Each side member 7 is bolted at its front end to the front axle support 2 and at its rear end to the post 8, and the underbeam is bolted to the underside of the transmission housing 3. Attachment fittings comprising apertured plates 10 are provided on the front end of the side member 7 and the upper ends of the post 8 for engagement by respective attachment fittings on the loader 5 comprising pins 11 that are adapted to engage the apertures in the plates 10.

It will be appreciated that the tractor chassis, the loader and the tractor attachment frame described so far may be of entirely conventional construction and thus they will not be described in any further detail.

When the loader 5 lifts a load, the weight of the load overhanging the front of the tractor produces a turning moment that is applied to the tractor chassis through the attachment frame and tends to lift the rear wheels. A bending force is thereby produced in the tractor chassis that acts to separate the upper region of the connections between the major chassis components, especially the connection between the engine and transmission. At the operational limits of the loader, an excessive load may produce such a high bending force in the chassis that a major component or a connection between major components may fail. In order to counteract this tendency and thereby increase the capacity of the tractor to lift heavy loads, a pair of longitudinally extending beam members 12 are connected to the chassis and are loaded in bending so as to resist the bending load applied to the chassis by the loader.

The beam members 12 are located one either side of the chassis, and each is connected at its front end of the respective side member 7 of the loader attachment frame, and at its rear end abuts the underside of the rear axle housing 4. An intermediate region of each beam member below the respective post 8 of the loader attachment frame, is bolted up against the transverse underbeam 9 so as to load the beam member in bending, thereby producing a bending reaction in the chassis that pre-loads said upper regions of the connections between the major chassis components in compression. Thus the bending load applied to the chassis by the loader is counteracted by the bending pre-load in the beam member 12.

Each beam member 12 comprises a square-section beam 13 that extends over the greater part of the length of the beam member below the underbeam 9 and rearwards and upwards towards the rear axle housing 4. An elongated upright plate 14 is connected to the forward end of the square-section beam 13 and extends forwards and upwards towards the side member 7 to which it is bolted at a forward location 15. A strengthening web 16 is welded to the plate 14 along its lower edge. An attachment plate 17 is connected to the rear end of the beam 13 and a bracket 18 is bolted to the plate 17 and is formed with a thrust pad 19 that abuts the underside of the rear axle housing 4. Different forms of brackets 18 may be provided to suit applications where different components are connected to the rear axle housing.

The intermediate connection between the beam member 12 and the underbeam 9, is provided by a bolted connection between a horizontal plate 20 welded to the top face of the beam 13 and an adjacent horizontal plate 21 formed by the web of a channel-section bracket 22. The bracket 22 is welded to the underside of the underbeam 9 via the side walls 23 of the bracket on opposite sides of the underbeam. A bolt 24 is inserted through aligned holes in both plates 20, 21 and is screwed into a nut 25 to a preset torque level so as to bring the plates together and produce the required bending pre-load in the beam member 12. A shim 26 is provided between the plates 20, 21 corresponding to the required bending pre-load. A further nut and bolt connection 27 is provided between an upright plate 28 welded to the side of the beam 13 and an upright plate 29 welded between the side walls 23 of the bracket 22.

In an alternative embodiment of the invention, the front ends of the longitudinally extending beam members 12 may be adapted so that they are connected directly to the chassis of the tractor. For example, the plate 14 may be extended forwards and bolted to the front axle support 2, or may be adapted for connection to the engine 1. The intermediate connections between the beam members and the chassis may also be adapted so as to be independent of the loader attachment frame 6. Such an arrangement would be applicable to a tractor without a front loader but which needs to be strengthened to extend its capacity to lift heavy loads at the rear.

**Claims**

1. An agricultural or industrial tractor comprising a plurality of major components (1 to 4) that are connected together to form an integral chassis or portion of a chassis, characterised in that one or more longitudinally extending beam members (12) are connected to the chassis and are pre-loaded in bending so as to apply a bending reaction to the chassis that compresses the upper parts of the connections between said major components (1 to 4).

2. A tractor as claimed in claim 1 in which each beam (12) member is connected to the chassis so that opposite ends thereof co-operate with the chassis and an intermediate portion thereof is connected to the chassis so as to pre-load the beam member in bending.

3. A tractor as claimed in claim 1 or 2 in which the major components include a transmission housing (3) and a rear axle housing (4), and in which the rear end of each beam member (12) co-operates with the rear axle housing (4) and said intermediate portion is connected to the transmission housing (3).

4. A tractor as claimed in claim 3 in which the rear end of the beam member (12) abuts the underside of the rear axle housing (4) and said intermediate portion is bolted up (24, 25) to the underside of the transmission housing (3).

5. A tractor as claimed in any one of claims 2 to 4 in which the major components include a front axle support (2) and on which the forward end of each beam member (12) is connected to the front axle support (2).

6. A tractor as claimed in any one of claims 3 to 5 in which the tractor is fitted with an attachment frame (6) suitable for supporting a front-mounted loader (5) and in which the front end of each beam member (12) is connected to said frame (6).

7. A tractor as claimed in claim 6 in which said intermediate portion is connected to said frame (6).

8. A tractor as claimed in claim 6 in which said attachment frame (6) comprises a longitudinal side member (7) each side of the chassis and a transverse member (9) that interconnects the side members (7), the front end of each side member being connected to a front axle support (2) of the chassis and the transverse member (9) being connected to the transmission housing (3), and the front end of each of two beam members (12), one either side of the chassis, being connected to a respective side member (7).

9. A tractor as claimed in claim 8 in which said intermediate portion of each beam member (12) is connected to said transverse member (9).

FIG.1

0 263 549

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 158 346 (DEERE)<br>* page 2; figures 1,2 *<br>--- | 1,6 | B 62 D 49/02<br>B 62 D 21/18 |
| A | DE-B-2 405 456 (ALOIS KOBER)<br>* claim 3 *<br>--- | 1 | |
| A | DE-A-3 216 589 (ALBERSINGER)<br>* page 3, line 1 - page 4, line 23; figure *<br>--- | 1,6 | |
| A | FR-A-2 575 027 (MAILLEUX et al.)<br>* claim 9; figures 1-3 *<br>----- | 1,6 | |
| | | | **TECHNICAL FIELDS SEARCHED (Int. Cl.4)**<br><br>B 62 D 49/00<br>B 62 D 21/00 |

The present search report has been drawn up for all claims

| Place of search | Date of completion of the search | Examiner |
|---|---|---|
| BERLIN | 16-12-1987 | KRIEGER P O |

EPO FORM 1503 03.82 (P0401)